# EUROPEAN PATENT APPLICATION

(11) **EP 4 485 726 A1**
(43) Date of publication of application: **01.01.2025**
(21) Application number: 24184986.8
(22) Date of filing: 27.06.2024
(51) Int. Cl.: H02G 15/113, H02G 3/06, H02G 15/007, H01R 13/52, H01R 13/59, H01R 43/00

(54) **PROTECTION DEVICES FOR ELECTRICAL CONNECTION ASSEMBLIES AND RELATED ELECTRICAL CONNECTION ASSEMBLIES**

(30) Priority: 29.06.2023 US 202363510995 P; 05.04.2024 US 202418627948
(71) Applicant: TE Connectivity Solutions GmbH, 8200 Schaffhausen (CH)
(72) Inventor: DRAUGHN, Austin, Fuquay-Varina, 27526 (US); PULLIUM, III, George, Fuquay-Varina, 27526 (US); MAHER, Kathryn Marie, Fuquay-Varina, 27526 (US)
(74) Representative: Johnstone, Edward Ian

(57) **Abstract**

A protection device (100) for an electrical connection including an electrical component (50) and cables (30) includes a first housing member (110a) having a main body (112) having a length (L1). The first housing member (110a) includes a main channel (115), a first cable channel (114), and a second cable channel (114) that together extend longitudinally the length (L1) of the main body (112). The device further includes a substantially identical second housing member (110b) configured to be mated and secured to the first housing member (110a) via one or more locking mechanisms (132, 134) configured to be received by or engaged with one or more corresponding apertures (132a) and/or recesses (134a). When the first housing member (110a) and the second housing member (110b) are mated together, the aligned main channels (115) of the first and second housing members (110a, 110b) form an internal cavity (115') sized and configured to hold the electrical component (50) therein and the aligned first and second cable channels (114) are sized and configured to hold a respective cable (30) connected to the electrical component (50) therein.

## Description

The present application claims priority to and the benefit of U.S. Provisional Patent Application Serial No. 63/510,995, filed June 29, 2023, the disclosures of which are hereby incorporated by reference in their entirety.

The present invention relates to electrical connections and, more particularly, to protection devices for electrical connection assemblies.

Currently, many in-line electrical components in an electrical connection assembly utilize one or more layers of overmold to seal and protect the electrical component from, for example, environmental conditions. However, existing overmolded electrical connection assemblies can be expensive or difficult to produce because of the complexity of the molding process involved. Therefore, alternative ways to seal and protect the in-line electrical components in an electrical connection assembly may be desired.

Embodiments of the present invention are directed to a protection device for an electrical connection. The protection device includes a first housing member having a main body having a length, the first housing member having a main channel, a first cable channel, and a second cable channel that together extend longitudinally the length of the main body. The protection device further includes a second housing member. The second housing member may be substantially identical to the first housing member. The second housing member may have a main body having a length. The second housing member may also have a main channel, a first cable channel, and a second cable channel that together extend longitudinally the length of the main body of the second housing member. The second housing member is configured to be mated and secured to the first housing member via one or more locking mechanisms configured to be received by or engaged with one or more corresponding apertures and/or recesses. When the first housing member and the second housing member are mated together, the aligned main channels of the first and second housing members form an internal cavity sized and configured to hold an electrical component therein and the aligned first and second cable channels are sized and configured to hold respective cables connected to the electrical component therein.

Further embodiments of the present invention are directed to an electrical connection assembly. The electrical connection assembly includes an in-line electrical component having a pair of cables connected to and extending outwardly from opposing ends of the electrical component and a protection device surrounding the in-line electrical component and creating a seal with the pair of cables. The protection device includes a first housing member having a main body having a length, the first housing member having a main channel, a first cable channel, and a second cable channel that together extend longitudinally the length of the main body. The protection device further includes a second housing member. The second housing member may be substantially identical to the first housing member. The second housing member may have a main body having a length. The second housing member may also have a main channel, a first cable channel, and a second cable channel that together extend longitudinally the length of the main body of the second housing member. The second housing member is configured to be mated and secured to the first housing member via one or more locking mechanisms configured to be received by or engaged with one or more corresponding apertures and/or recesses. The first housing member and the second housing member are mated together such that the electrical component is held within the aligned main channels of the first and second housing members and each cable is respectively held within the aligned first and second cable channels.

Further embodiments of the present invention are directed to a protection device for an electrical connection. The protection device includes a tubular housing having a main body including threaded sections at opposing ends of the main body and a bore extending therethrough; a pair of grommets, each grommet having an annular main body with an opening extending therethrough, the opening being sized and configured to receive a cable connected to an electrical component; a pair of pinch rings, each pinch ring having an annular main body with an opening extending therethrough that is sized and configured to receive a respective grommet, each pinch ring being integral with or coupled to a respective threaded sections of the housing; and a pair of securing members, each securing member having a main body with at least a portion of an inner surface of the main body having a threaded section configured to engage a respective threaded section of the housing. The bore of the housing is sized and configured to hold the electrical component therein and the pinch rings and grommets are configured to create a seal between the protection device and the cables connected to the electrical component.

Further embodiments of the present invention are directed to an electrical connection assembly. The assembly includes an in-line electrical component having a pair of cables connected to and extending outwardly from opposing ends of the electrical component and a protection device surrounding the in-line electrical component and creating a seal with the pair of cables. The protection device includes a tubular housing having a main body including threaded sections at opposing ends of the main body and a bore extending therethrough; a pair of grommets, each grommet having an annular main body with an opening extending therethrough, the opening being sized and configured to receive a cable connected to an electrical component; a pair of pinch rings, each pinch ring having an annular main body with an opening extending therethrough that is sized and configured to receive a respective grommet, each pinch ring being integral with or coupled to a respective threaded sections of the housing; and a pair of securing members, each securing member having a main body with at least a portion of an inner surface of the main body having a threaded section configured to engage a respective threaded section of the housing. The electrical component is contained within the bore of the housing and the pinch rings and grommets create a seal between the protection device and the cables connected to the electrical component.

Further features, advantages and details of the present invention will be appreciated by those of ordinary skill in the art from a reading of the figures and the detailed description of the preferred embodiments that follow, such description being merely illustrative of the present invention.
**FIG. 1** is a perspective view of an electrical connection assembly according to embodiments of the present invention.
**FIG. 2A** is a perspective view of the assembly of **FIG. 1** with a first housing member of the protection device removed to show a heat shrink layer applied to an electrical component of the electrical connection assembly according to embodiments of the present invention.
**FIG. 2B** is a perspective view of the electrical connection assembly of **FIG. 2A** without the heat shrink layer applied to the electrical component (*e.g*., a photovoltaic fuse) of the electrical connection assembly according to embodiments of the present invention.
**FIG. 3A** is a perspective view of a protection device for the electrical connection assembly of **FIG. 1** according to embodiments of the present invention.
**FIG. 3B** is an exploded side view of the protection device of **FIG. 3A****.**
**FIG. 4** is a perspective view of a housing member of the protection device of **FIGS. 3A-3B** according to embodiments of the present invention.
**FIG. 5A** is a perspective view of an alternative protection device that may be used in the electrical connection assembly of **FIG. 1** according to embodiments of the present invention.
**FIG. 5B** is a sectional view of the protection device of **FIG. 5A****.**
**FIG. 5C** is an exploded side view of the protection device of **FIG. 5A****.**
**FIG. 6** is a perspective view of a main housing body of the protection device of **FIG. 5A****.**
**FIGS. 7A-7B** are perspective end views of a securing member of the protection device of **FIG. 5A****.**
**FIG. 8A** is a perspective view of a pinch ring of the protection device of **FIG. 5A** according to embodiments of the present invention.
**FIG. 8B** is an end view of the pinch ring of **FIG. 8A****.**
**FIGS. 9A-9B** are perspective end views of a grommet of the protection device of **FIG. 5A** according to embodiments of the present invention.
**FIG. 10** is an enlarged perspective view of an electrical connection assembly utilizing the protection device of **FIG. 5A** according to embodiments of the present invention.
**FIG. 11** is a perspective view of an alternative configuration for the protection device of **FIG. 5A** according to embodiments of the present invention.
**FIG. 12A** is a perspective view of a first housing member of the protection device of **FIG. 11** according to embodiments of the present invention.
**FIG. 12B** is a side view of the first housing member of **FIG. 12A****.**
**FIG. 13A** is a perspective view of a second housing member of the protection device of **FIG. 11** according to embodiments of the present invention.
**FIG. 13B** is a side view of the second housing member of **FIG. 13A****.**
**FIG. 14A** is a perspective view of an electrical connection assembly utilizing the protection device of **FIG. 11** according to embodiments of the present invention.
**FIG. 14B** is a sectional perspective view of the electrical connection assembly of **FIG. 14A** according to embodiments of the present invention.

The present invention now will be described more fully hereinafter with reference to the accompanying drawings, in which illustrative embodiments of the invention are shown. In the drawings, the relative sizes of regions or features may be exaggerated for clarity. This invention may, however, be embodied in many different forms and should not be construed as limited to the embodiments set forth herein; rather, these embodiments are provided so that this disclosure will be thorough and complete, and will fully convey the scope of the invention to those skilled in the art.

It will be understood that when an element is referred to as being "coupled" or "connected" to another element, it can be directly coupled or connected to the other element or intervening elements may also be present. In contrast, when an element is referred to as being "directly coupled" or "directly connected" to another element, there are no intervening elements present. Like numbers refer to like elements throughout. As used herein the term "and/or" includes any and all combinations of one or more of the associated listed items.

In addition, spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

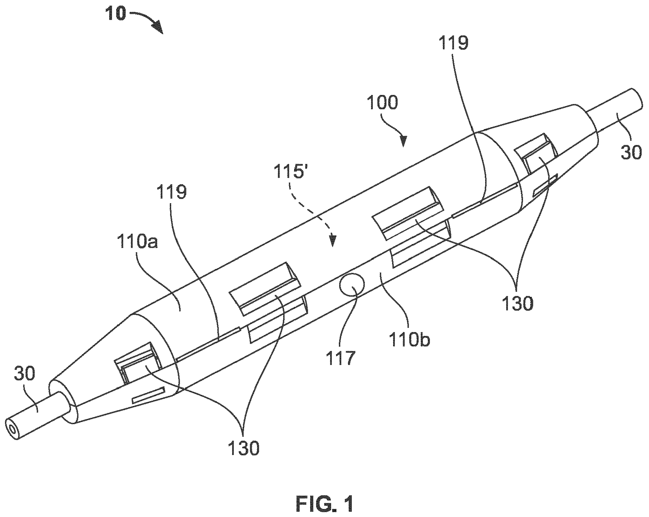

Embodiments of the invention are directed to protection devices and electrical connection assemblies utilizing the protection devices that protect and provide an effective seal from environmental conditions (*e*.*g*., moisture, UV exposure), fire retardancy and/or impact resistance which could potentially damage the electrical component contained therein. The protection devices of the present invention reduce material usage and eliminate the need for a complex assembly/molding process, thereby simplifying the manufacturing process while also reducing manufacturing costs. Embodiments of the present invention will now be discussed in greater detail below with reference to **FIGS. 1-14B****.**

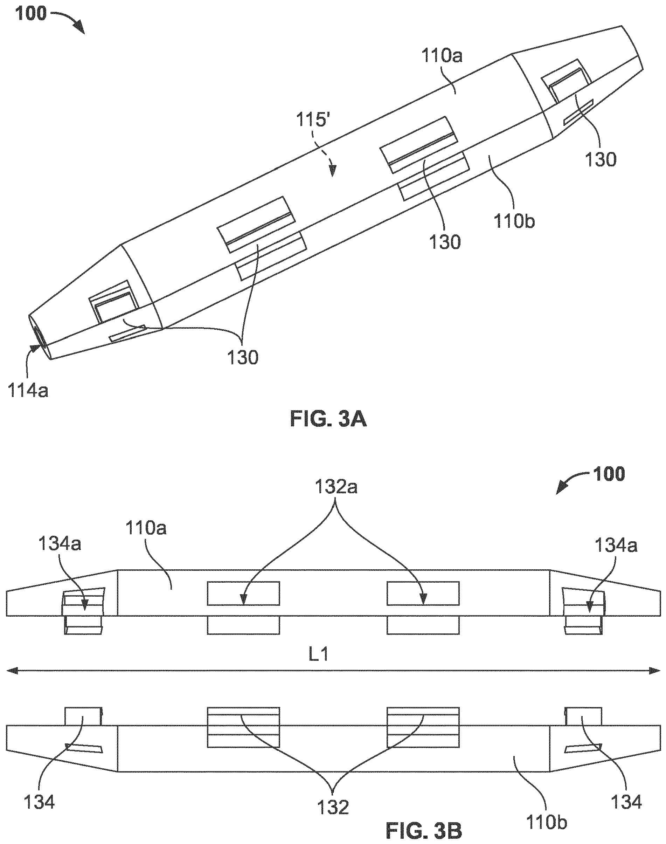

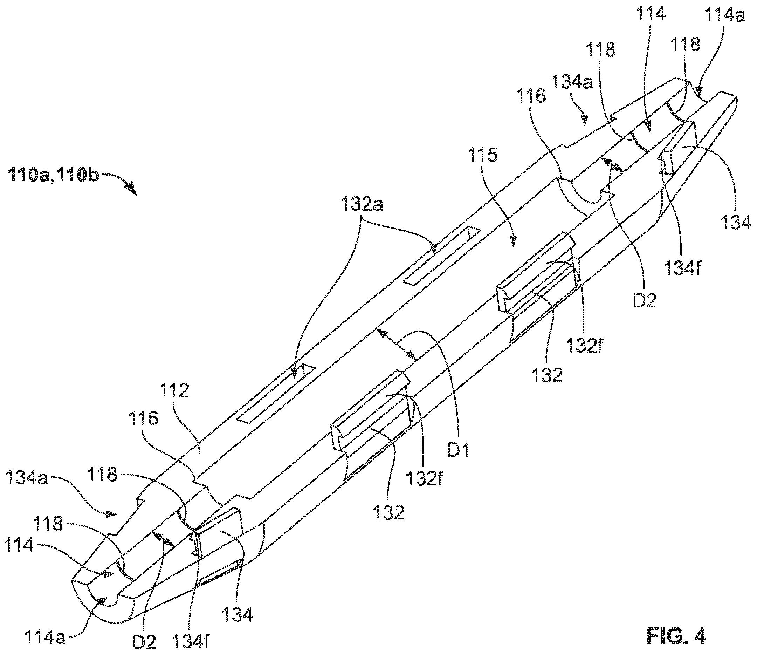

An electrical connection assembly according to some embodiments of the present invention, designated broadly at **10,** is illustrated in **FIGS. 1-2B****.** As shown in **FIGS. 1-2B****,** the electrical connection assembly **10** includes a protection device **100** that is configured to protect an in-line electrical component **50** between two cables **30** (*see also, e.g.,* **FIGS. 3A-3B** and **FIG. 4**). In some embodiments, the electrical component **50** may be a fuse, sensor, or connector. In some embodiments, the electrical component **50** may be a photovoltaic fuse. The protection device **100** is sized and configured to surround the electrical component **50** and provide a seal with the cables **30** connected to and extending outwardly from opposing ends of the electrical component **50.** In some embodiments, the protection device **100** helps to provide protection from environmental conditions (*e.g*., moisture, UV exposure), dirt/dust ingress, fire retardancy, impact resistance, and/or general mechanical protection (*e.g*., crush or other force applied that is not an impact) which could potentially damage the electrical component **50** contained therein.

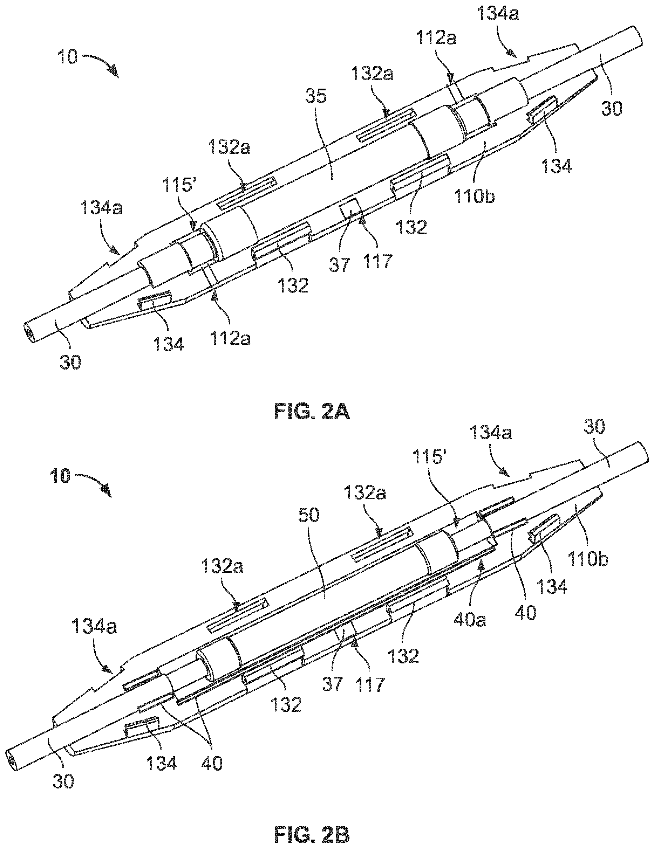

As shown in **FIG. 1** and **FIGS. 2A****-2B,** and discussed in further detail below, in some embodiments, the protection device **100** includes an internal cavity **115'** (formed by aligned main channels **115** of housing members **110a, 110b**) that is sized and configured to hold the electrical component **50** therein (**FIG. 2B**). As shown in **FIG. 2A****,** in some embodiments, the internal cavity **115'** (main channels **115**) of the protection device **100** may be sized and configured to hold the electrical component **50** having a layer of heat shrink **35** applied around the electrical component **50.**

Referring to **FIGS. 3A-3B** and **FIG. 4****,** the protection device **100** according to embodiments of the present invention is illustrated. As shown in **FIGS. 3A-3B****,** in some embodiments, the protection device **100** may comprise one or more housing members **110** that are configured to be secured together around the electrical component **50.** In some embodiments, the one or more housing members **110** may be formed from one or more polymeric and/or elastomeric materials. For example, in some embodiments, the one or more housing members **110** may be formed from multiple layers of polymeric and/or elastomeric materials. Materials that may form the protection device **100** include, but are not limited to, polyamide, polyphenylene ether, polypropylene, polystyrene, or any other suitable polymeric or elastomeric material that meets the required properties for the desired use (*e.g*., F1 rating for outdoor industrial use, flame retardancy, impact resistance, etc.).

As shown in **FIG. 3B****,** in some embodiments, the protection device **100** may comprise two housing members **110a, 110b** that are configured to be secured together via one or more locking mechanisms **132, 134.** In some embodiments, the two housing members **110a, 110b** may be identical which allows the housing members **110a, 110b** to be formed from the same mold, thereby simplifying the manufacturing process while also reducing manufacturing costs. As shown in **FIG. 3B****,** in some embodiments, the housing members **110a, 110b** may be two separate components that are configured to be snapped (secured) together via the locking mechanisms **132, 134.** In some embodiments, the housing members **110a, 110b** may be coupled together via one or more living hinges **119** (*see, e.g.,* **FIG. 1**) which allows the housing members **110a, 110b** to pivot between an opened position and a closed position, *e.g*., around the electrical component **50.** Each housing member **110a, 110b** has a sufficient length **L1** to extend past the electrical component **50** to be protected and engage the cables **30** connected at opposing ends to the electrical component **50** (*see, e.g.,* **FIGS. 2A-2B**). For example, in some embodiments, the length **L1** of the housing members **110a, 110b** (*i.e.,* the length **L1** of the protection device **100**) is in a range of between about 100 mm and about 300 mm.

As shown in **FIG. 4****,** in some embodiments, each housing member **110a, 110b** has a main body **112** with a series of channels **114, 115** that together extend longitudinally the length **L1** of the main body **112** of each housing member **110a, 110b.** As noted above, in some embodiments, each housing member **110a, 110b** has a main channel **115** having a first inner diameter **D1.** For example, in some embodiments, the main channel **115** of each housing member **110a, 110b** has an inner diameter **D1** in a range of between about 10 mm and about 100 mm. As noted above, together the main channels **115** of the housing members **110a, 110b** form an internal cavity **115'** that is sized and configured to fit the electrical component **50** to be protected therein (and, in some embodiments, an electrical component **50** having a heat shrink layer **35**) (*see also, e.g.,* **FIGS. 2A-2B**). In other words, when the housing members **110a, 110b** of the protection device **100** are secured together, the electrical component **50** (and, optionally, the heat shrink layer **35**) fits within the aligned main channels **115** of the mated housing members **110a, 110b** *(i.e.,* the internal cavity **115'** of the protection device **100**) (*see, e.g.,* **FIGS. 2A-2B**).

As further shown in **FIG. 4****,** in some embodiments, each housing member **110a, 110b** of the protection device **100** also have first and second cable channels **114** that are in fluid communication with and extend axially outwardly in opposing directions from the main channel **115** (*i.e.,* the main channel **115** resides between the first and second cable channels **114**). The first and second cable channels **114** have a second inner diameter **D2** that is sized and configured such that a respective cable **30** fits therein (*see also, e.g.,* **FIGS. 2A-2B**). In other words, when the housing members **110a, 110b** of the protection device **100** are secured together, the respective cables **30** *(i.e.,* connected to and extending outwardly from opposing ends of the electrical component **50**) fit within the aligned first and second cable channels **114** of the mated housing members **110a, 110b** (*see, e.g.,* **FIGS. 2A-2B**). For example, in some embodiments, the first and second cable channels **114** have an inner diameter **D2** in a range of between about 3 mm and about 50 mm. As shown in **FIG. 4****,** in some embodiments, the inner diameter **D2** of the first and second cable channels **114** is equal to or less than the inner diameter **D1** of the main channel **115** (*i.e*., **D2** ≤ **D1**) which may form respective shoulders **116** between the main channel **115** and the first and second cable channels **114.**

The first and second cable channels **114** extend to openings **114a** at opposing ends of the main body **112** of the housing members **110a, 110b.** The openings **114a** provide entry points into the protection device **100** for the cables **30.** As shown in **FIG. 4****,** in some embodiments, the first and/or second cable channels **114** may comprise one or more rib members **118.** In some embodiments, the one or more rib members **118** may help provide an additional seal between the protection device **100** and the cables **30,** for example, when a smaller diameter cable **30** is inserted into the respective channel **114.** In addition, the one or more rib members **118** may help provide additional grip on the cables **30** to further secure the cables **30** within the respective channel **114.**

Still referring to **FIG. 4** (*see also, e.g.,* **FIGS. 2A-2B** and **FIG. 3B**), as discussed above, in some embodiments, each housing member **110a, 110b** may further include one or more locking mechanisms **132, 134.** In some embodiments, the locking mechanism **132, 134** extend upwardly from the main body **112** of each housing member **110a, 110b** and may reside proximate to an outer edge of the main body **112.** Each housing member **110a, 110b** also includes one or more corresponding apertures **132a** and recesses **134a** that are configured to receive/engage with the locking mechanism **132, 134** of the other housing member **110a, 110b** (*i.e.,* to secure the two members **110a, 110b** together). In some embodiments, the apertures **132a** and recesses **134a** may reside proximate to an opposing outer edge of the main body **112** from the locking members **132, 134.** In some embodiments, the locking mechanisms **132, 134** of one member **110a** are positioned and configured to align with and be received by a corresponding aperture **132a** or recess **134a** of the other member **110b** to secure the two members **110a, 110b** together. In some embodiments, the locking mechanisms **132, 134** are configured to provide a snap-fit type connection with the corresponding aperture **132a** or recess **134a.** For example, in some embodiments, each locking mechanism **132, 134** may comprise a cantilevered latch or hook **132f, 134f** that is configured to deflect and engage with the respective aperture **132a** or recess **134a** when the two housing members **110a, 110b** are pressed (snapped) together, thereby securing the housing members **110a, 110b** together.

In some embodiments, one of the housing members **110a, 110b** may comprise an additional aperture or recess **117** that is configured to receive a sensor **37** therein (*see, e.g.,* **FIG. 1** and **FIGS. 2A****-2B**). In some embodiments, the sensor **37** may be used for the detection of a blown fuse, high temperature event, and/or provide other critical information with respect to, for example, the electrical component **50** contained within the protection device **100.** In some embodiments, pockets or channels **40a** of mastic (or other sealing) material **40** may be incorporated into the protection device **100** (*e.g*., between the two housing members **110a, 110b**) in order to further seal the electrical component **50** from the outside environment, as well as help improve the secureness of the cables **30** in the protection device **100** (*see, e.g.,* **FIG. 2B**). As shown in **FIG. 2A****,** in some embodiments, for example, if mastic (or other sealing) material **40** is not used (other than a heat shrink layer **35**), the main body **112** of one or both of the housing members **110a, 110b** may further comprise one or more drain holes **112a** to help prevent the accumulation of water inside the internal cavity **115'** of the protection device **100.**

To install the protection device **100,** the electrical component **50** is first placed within the main channel **115** of one of the housing members **110b** and the cables **30** extending from opposing ends of the electrical component **50** are placed in respective cable channels **114.** Optionally, mastic **40** (or other like sealing material) may be placed in pockets and/or channels **40a** along one or both of the housing members **110a, 110b** and/or on each side of the cables **30** adjacent to where the cables **30** enter the main channel **115** (*i.e.,* near shoulders **116**). The other housing member **110a** is then placed over the housing member **110b** holding the electrical component **50** and cables **30** therein and the respective locking mechanisms **132, 134** are aligned with the corresponding apertures **132a** and recesses **134a** for both housing members **110a, 110b.** Once aligned, the two housing members **110a, 110b** are pressed together to engage the locking mechanisms **132, 134** with the corresponding apertures **132a** and recesses **134a** to mate the two housing members **110a, 110b** together, thereby securing the electrical component **50** (and ends of the cables **30** connected thereto) within the protection device **100.**

For installation of the protection device **100** having the housing members **110a, 110b** coupled together via a living hinge **119,** after the electrical component **50** and cables **30** are placed in the channels **114, 115** of one of the housing members **110b,** the other housing member **110a** may be pivoted to a closed position and secured to the housing member **110b** holding the electrical component **50** and cables **30** in a similar manner as described above.

In other embodiments, the protection device **100** may comprise multiple additional housing members **110** with some of the housing members **110** including features that are configured to mechanically secure the cable **30** to each end of the electrical component **50** to provide additional strain relief. In some embodiments, the additional strain relief provided by these features may help allow the electrical connection assembly **10** satisfy the requirements of Underwriters Laboratories (UL) Standard UL9703 for Distributed Generation Wiring Harnesses.

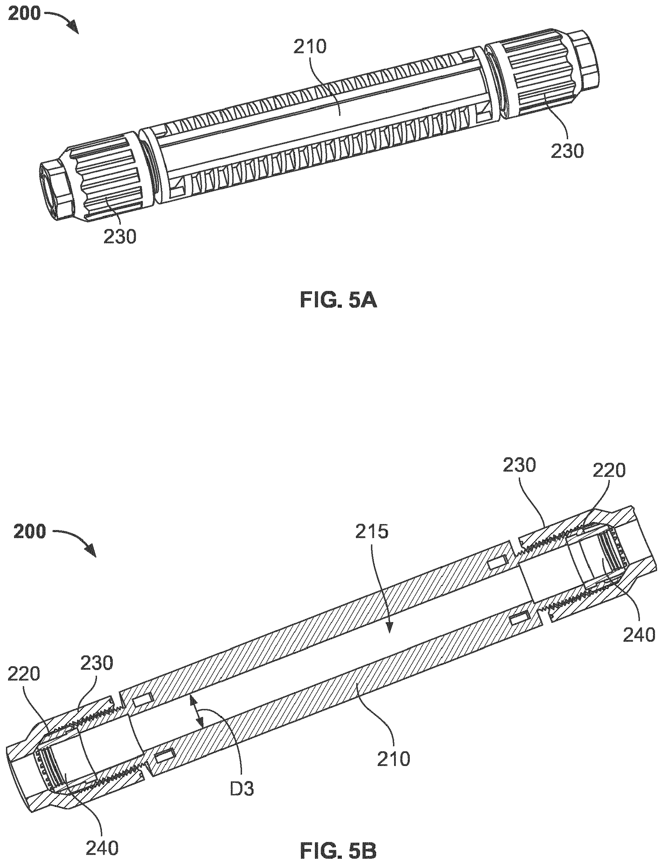

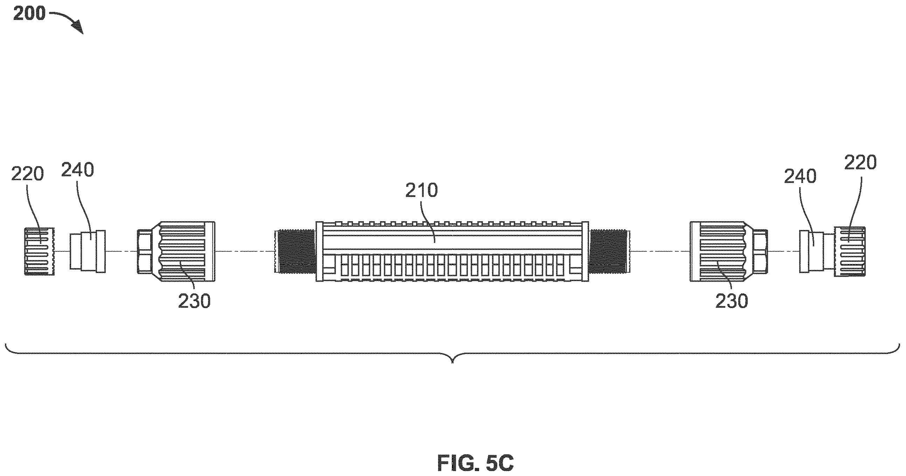

Referring now to **FIGS. 5A-10****,** an alternative protection device **200** for an electrical connection assembly **10'** according to embodiments of the present invention is illustrated. Properties and/or features of the protection device **200** and/or electrical connection assembly **10'** may be as described above in reference to the protection device **100** and electrical connection assembly **10** shown in **FIGS. 1-4** and duplicate discussion thereof may be omitted herein for the purposes of discussing **FIGS. 5A-10****.**

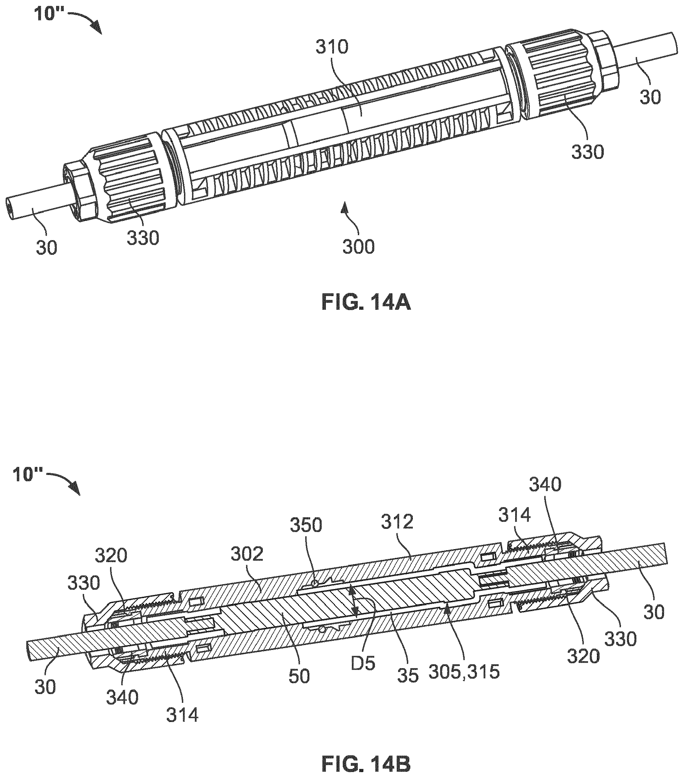

The protection device **200** that is configured to protect an in-line electrical component **50** between two cables **30** in a similar manner to the protection device **100** shown in **FIGS. 3A-3B** and **FIG. 4** (*see also, e.g.,* **FIGS. 14A-14B**). The protection device **200** is sized and configured to surround the electrical component **50** and provide a seal with the cables **30** connected to and extending outwardly from opposing ends of the electrical component **50.** In some embodiments, the protection device **200** helps provide protection from environmental conditions (*e.g*., moisture, UV exposure), dirt/dust ingress, fire retardancy, impact resistance and/or general mechanical protection which could potentially damage the electrical component **50** contained therein. In some embodiments, the electrical component **50** may be a fuse, sensor, or connector. In some embodiments, the electrical component **50** may be a photovoltaic fuse.

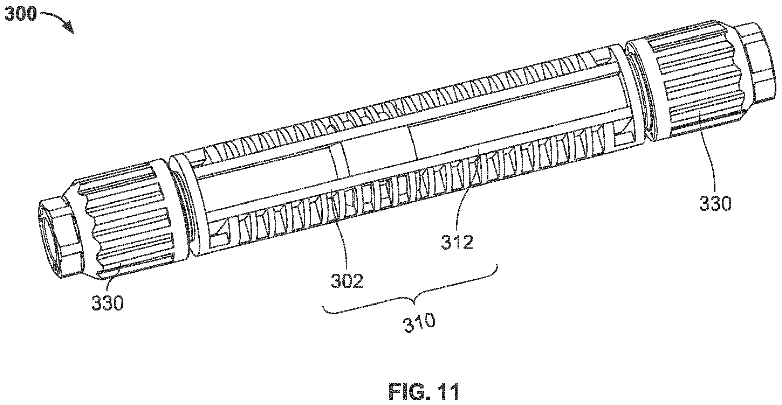

As shown in **FIGS. 5A-5C****,** the protection device **200** includes a tubular housing **210.** Two securing members **230** that are configured to engage opposing ends of the housing **210** to secure the protection device **200** around the electrical component **50** and to the cables **30** connected thereto. In some embodiments, the housing **210** may comprise two or more housing members that are secured together, for example, when a larger electrical component **50** needs to be protected (*see, e.g.,* protection device **300** illustrated in **FIGS. 11-14B** and described in further detail below). As further shown in **FIGS. 5A-5C****,** the protection device **200** also includes two pinch rings **220.** Each pinch ring **220** may be integral with or coupled to opposing ends of the housing **210.** In addition, the protection device **200** may further comprise two grommets **240.** The grommets **240** are sized to fit within an inner diameter of a respective pinch ring **220** and configured to engage the cables **30.** As discussed in further detail below, the pinch rings **220** and grommets **240** help provide a seal between the protection device **200** and the cables **30.** Similar to the protection device **100** described herein, the protection device **200** may be formed from a polymeric and/or elastomeric material. Materials that may form the protection device **200** include, but are not limited to, polyamide, polyphenylene ether, polypropylene, polystyrene, or any other suitable polymeric or elastomeric material that meets the required properties for the desired use (*e.g*., F1 rating for outdoor industrial use, flame retardancy, impact resistance, etc.).

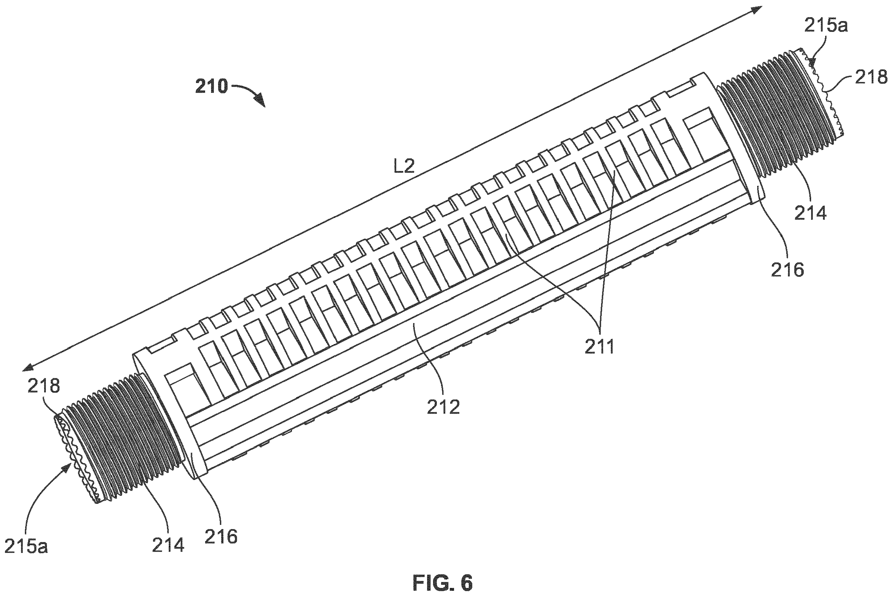

The housing **210** of the protection device **100** is further illustrated in **FIG. 6****.** As shown in **FIGS. 5A-5C** and **FIG. 6****,** in some embodiments, the housing **210** has a main body **212** that may have a cylindrical shape. In other embodiments, the main body **212** of the housing **210** may have another shape (*e.g*., hexagonal). The housing **210** has a length **L2** in a range of between about 100 mm and about 300 mm. The housing **210** comprises threaded sections **214** at opposing ends of the main body **212** and a bore **215** extending therethrough (*see, e.g.,* **FIG. 5B**). Openings **215a** reside at opposing ends of the housing **210,** thereby providing entry/exit points for the cables **30.** As described in further detail below, the threaded sections **214** are configured to engage with the securing members **230** to secure the protection device **100** to the cables **30** and around the electrical component **50.** The bore **215** has an inner diameter **D3** sized and configured to fit around the electrical component **50** (and, in some embodiments, an electrical component **50** having a heat shrink layer **35** such as shown in **FIG. 2A**). For example, in some embodiments, the bore **215** of the housing **210** has an inner diameter **D3** in a range of between about 10 mm and about 100 mm.

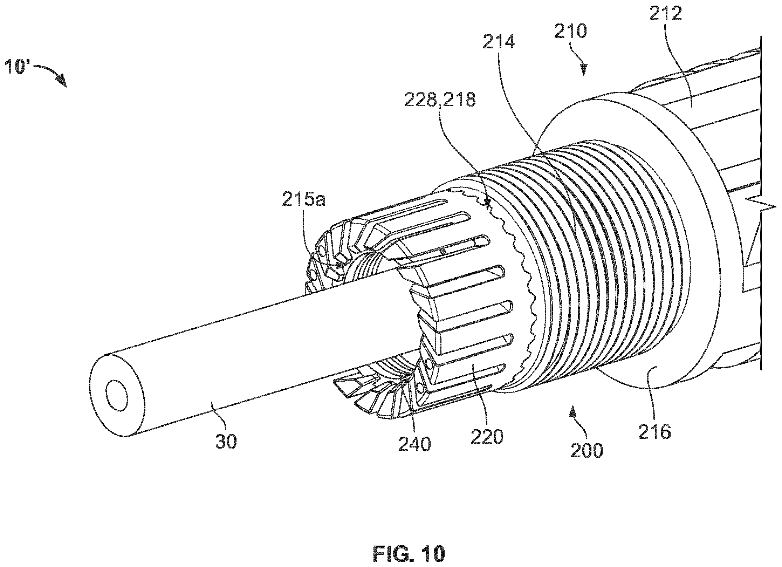

As shown in **FIG. 6****,** in some embodiments, a plurality of engagement (anti-rotation) features **218** are located at the free ends of the threaded sections **214** (*i.e*., proximate to the openings **215a** of the housing **210**). As discussed in further detail below, in some embodiments, as shown in **FIG. 10****,** the plurality of engagement features **218** are configured to engage with corresponding features **228** of the pinch rings **220** (*i.e*., when the pinch rings **220** are separate components and not integrally formed with the housing **210**). In some embodiments, the main body **212** of the housing **210** may comprise a plurality of gripping features **211.** The gripping features **211** may be configured to help a user hold onto the housing **210,** for example, when the housing **210** is being slid onto a cable **30** and around the electrical component **50** to be protected. In some embodiments, as shown in **FIG. 6****,** the outer diameter of the main body **212** of the housing **210** may be greater than the outer diameter of the threaded sections **214** such that an annular shoulder **216** is formed between the main body **212** and the threaded sections **214.** In some embodiments, the annular shoulders **216** may serve as a mechanical stop for the securing members **230.**

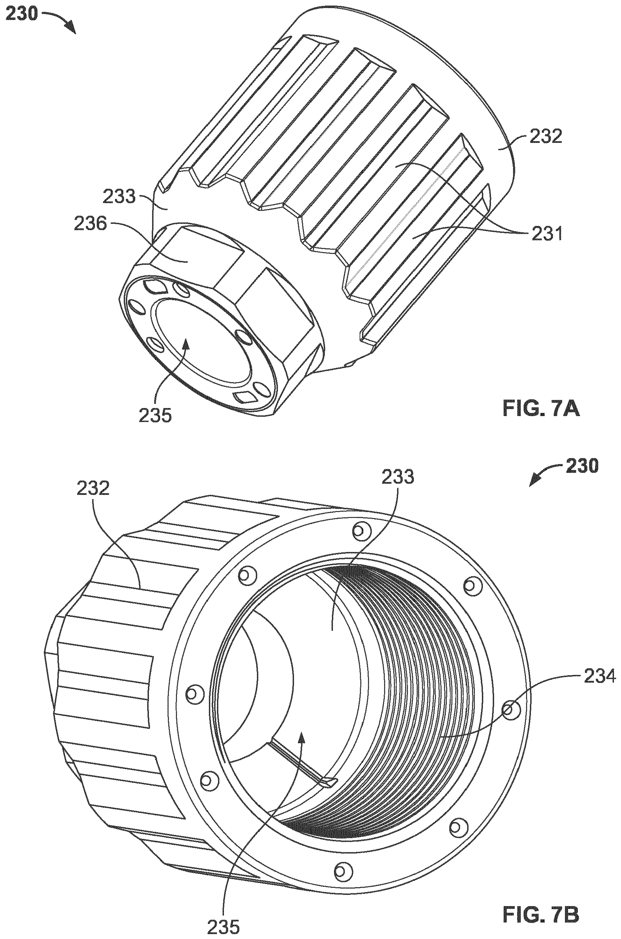

Referring to **FIGS. 7A-7B****,** one of the securing members **230** of the protection device **200** according to embodiments of the present invention is illustrated. As shown in **FIGS. 7A-7B****,** each securing member **230** has a main body **232** with a bore **235** extending therethrough. The main body **232** of the securing members **230** are sized and configured to engage the threaded sections **214** of the housing **210.** In some embodiments, the main body **232** may comprise a tapered section **233.** For example, in some embodiments, at least a portion of an inner surface of the main body **232** of each securing member **230** has a threaded section **234.** The threaded section **234** of the securing member **230** is configured to engage a respective threaded section **214** of the housing **210** to secure the securing member **230** to the housing **210.** As discussed in further detail below, in some embodiments, the tapered section **233** of the securing member **230** is configured to engage with the pinch ring **220** to help create a seal between the grommet **240** and the cable **30.**

In some embodiments, the main body **232** of the securing member **230** may further comprise a plurality of gripping features **231** to help a user handle the securing member **230** when screwing the securing member **230** onto the housing **210.** In some embodiments, the main body **232** of each securing member **230** may further comprise an end segment **236** configured such that a tool (*e.g*., a hex wrench) may be used to help tighten the securing members **230** onto the housing **210.**

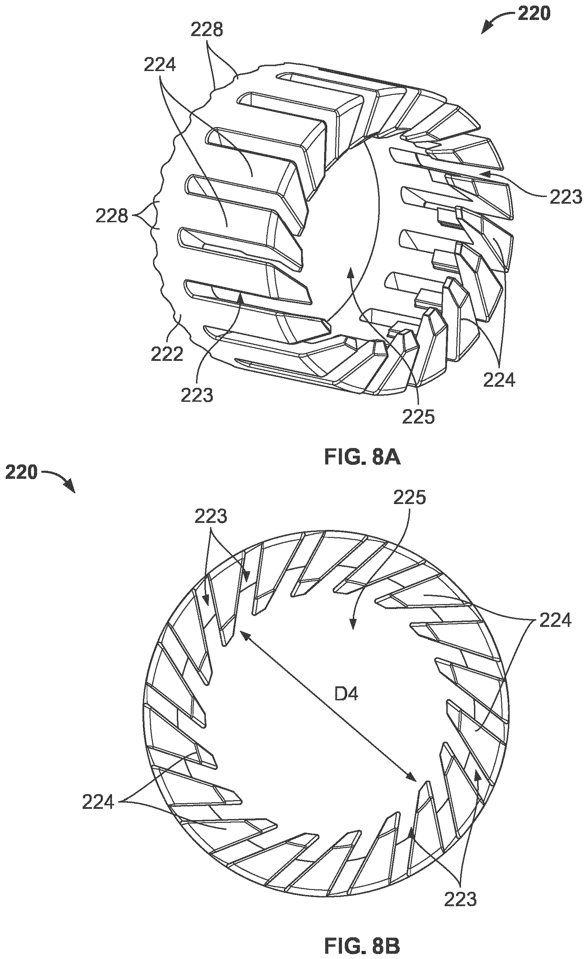

Referring to **FIGS. 8A-8B****,** one of the pinch rings **220** of the protection device **200** according to embodiments of the present invention is illustrated. As shown in **FIGS. 8A-8B****,** each pinch ring **220** has an annular main body **222** with an opening **235** extending therethrough having an inner diameter **D4.** The inner diameter **D4** that is sized and configured to receive a grommet **240** (and a cable **30**) (*see, e.g.,* **FIG. 10**). For example, in some embodiments, the opening **235** of the pinch ring **220** has an inner diameter **D4** in a range of between about 3 mm and about 50 mm. As noted above, in some embodiments, the main body **222** may comprise a plurality of engagement (anti-rotation) features **228** that are configured to engage with corresponding features **218** of the threaded sections **214** of the housing **210** (*see, e.g.,* **FIG. 10**). As further shown in **FIGS. 8A-8B****,** the pinch rings **220** further comprises a plurality of fingers **224** extending radially inwardly at an angle from the main body **222.** A gap **223** resides between each of the fingers **224.** As discussed in further detail below, as the securing member **230** is being tightened onto the threaded section **214** of the housing **210,** the tapered section **233** of the securing member **230** forces the fingers **224** to deflect and exert a radially inward force against the grommet **240** and subsequently the cable **30,** thereby creating a seal between the protection device **200** and the cable **30.**

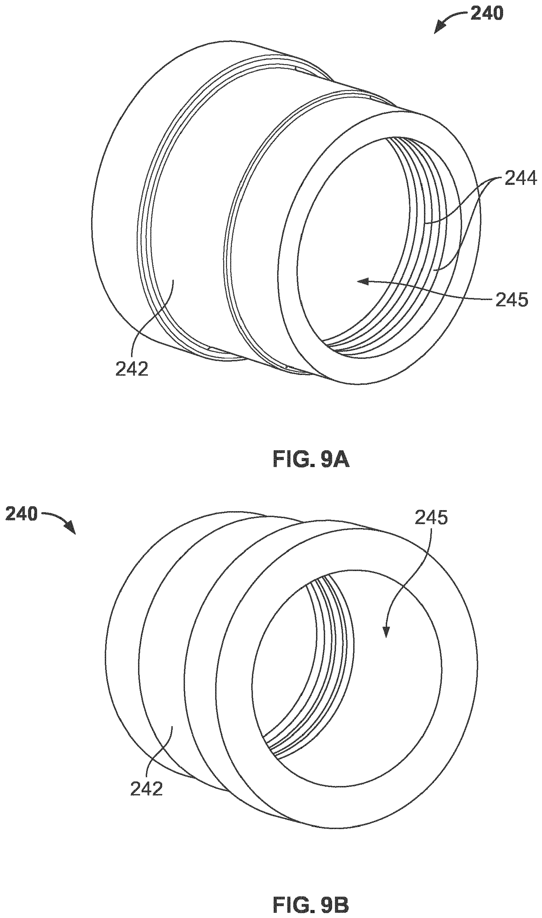

Referring to **FIGS. 9A-9B****,** one of the grommets **240** of the protection device **200** according to embodiments of the present invention is illustrated. Each grommet **240** has an annular main body **242** with an opening **245** extending therethrough. As noted above, the grommet **240** are sized to fit within the inner diameter **D4** of the pinch rings **220.** The opening **245** is sized and configured to receive a cable **30** connected to and extending outwardly from the electrical component **50** (*see, e.g.,* **FIG. 10**). In some embodiments, an inner surface of the grommets **240** may comprise one or more annular ribs **244.** Similar to the rib members **118** described herein with respect to protection device **100,** in some embodiments, the one or more annular rib **244** of the grommet **240** may help provide an additional seal between the protection device **200** and the cables **30,** for example, when a smaller diameter cable **30** is inserted through the opening **245** of the grommet **240.** In addition, the one or more annular ribs **244** may help provide additional grip on the cables **30** to further secure the cables **30** within the grommet **240.** As discussed further below, in some embodiments, the interaction between the grommet **240** and pinch ring **220** provide an effective seal from the outside environment such that a heat shrink layer **35** covering the electrical component **50** may not be needed. In other embodiments, a head shrink layer **35** may still be applied to the electrical component **50** and the bore **215** of the housing **210** may be filled with mastic (or other like sealing) material **40** to remove any air spaces within the bore **215.**

An electrical connection assembly **10'** according to embodiments of the present invention and utilizing the protection device **200** described herein is illustrated in **FIG. 10. FIG. 10** shows one end of the protection device **200** without the securing member **230** threaded onto the threaded section **214** of the housing **210.** A cable **30** is extending out through the opening **215a** of the housing **210.** As shown in **FIG. 10****,** the grommet **240** is sized and configured to fit within the pinch ring **220.** The engagement (or anti-rotation) features **218, 228** of the threaded section **214** of the housing **210** and the pinch ring **220** are configured to engage with each other. For example, as shown in **FIG. 10****,** in some embodiments, the engagement features **218, 228** may comprise a plurality of recesses or protrusions that are configured to interlock with each other. The interlocking of the engagement features **218, 228** may help to provide additional resistance from the pinch ring **220** rotating relative to the housing **210** after the securing member **230** is tightened on the threaded section **214** of the housing **210.** In other embodiments, the pinch ring **220** may be integrally formed with the housing **210,** and thus, the engagement features **218, 228** would not be needed.

To install the protection device **200,** first, the securing members **230,** pinch rings **220,** grommets **240,** and housing **210** are slid over an electrical connection until the electrical component **50** to be protected is fully received within the bore **215** of the housing **210** and the cables **30** connected thereto extend outwardly from opposing ends of the housing **210.** When the pinch rings **220** are separate components (*i.e*., not integrally formed with the housing), a user secures the grommets **240** within the respective pinch rings **220,** and the anti-rotation features **228** of the pinch rings **220** are engaged with corresponding anti-rotation features **218** of the housing **210.** After the pinch rings **220** and grommets **240** are in position, each securing member **230** may then be screwed onto respective threaded sections **214** of the housing **210,** either by hand and/or with a tool. As the securing members **230** are tightened onto the threaded sections **214** of the housing **210,** a radially inward force is applied by the tapered section **233** of the securing member **230** against the plurality of fingers **224** of the pinch ring **220.** The radially inward force causes the fingers **224** of the pinch ring **220** to deflect against the grommet **240,** thereby securing the grommet **240** in place, while also creating an effective seal against the cable **30.**

Referring to **FIGS. 11-13B****,** an alternative protection device **300** according to embodiments of the present invention is illustrated. An electrical connection assembly **10"** according to embodiments of the present invention and utilizing the protection device **300** described herein is illustrated in **FIGS. 14A-14B****.** Properties and/or features of the protection device **300** and electrical connection assembly **10"** may be as described above in reference to the protection device **200** and electrical connection assembly **10'** shown in **FIGS. 5A-10** and duplicate discussion thereof may be omitted herein for the purposes of discussing **FIGS. 11-14B****.**

As shown in **FIG. 11****,** the protection device **300** differs from the protection device **200** described herein in that the housing **310** of the protection device **300** comprises two housing members **302, 312** that are configured to be secured together, thereby allowing the protection device **300** of the present invention to be used with respect to larger electrical components **50** that would not typically fit within the single housing **210** configuration of the protection device **200.** The remaining components of the protection device **300** (*i.e.,* pinch rings **320,** securing members **330,** and grommets **340**) are similar to those described herein with respect to protection device **200,** and therefore, will not be described in further detail (*see, e.g*., **FIG. 14B**). It is noted that in other embodiments, the protection device of the present invention may include more than two housing members secured together in a similar manner as described below.

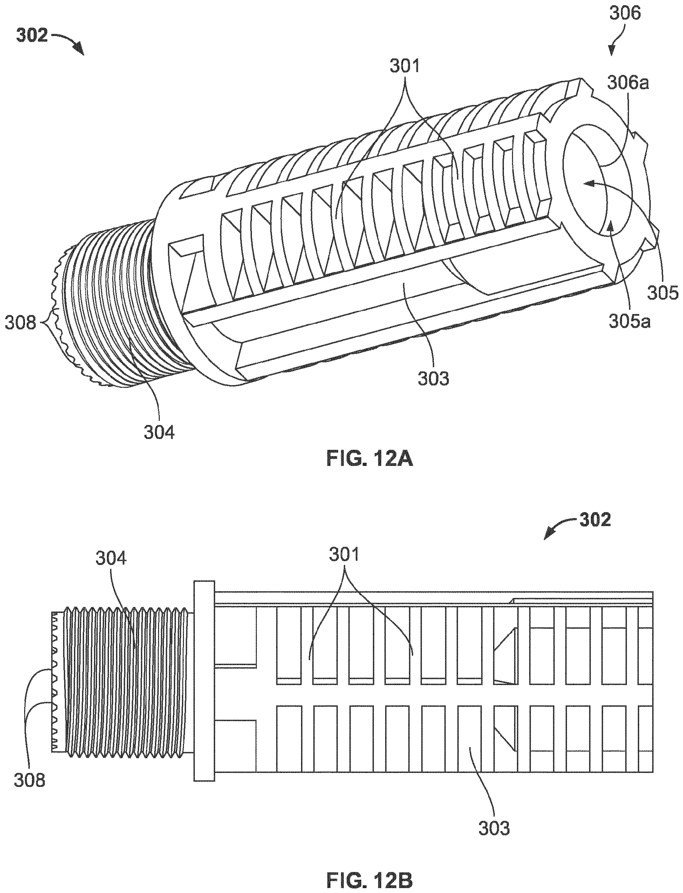

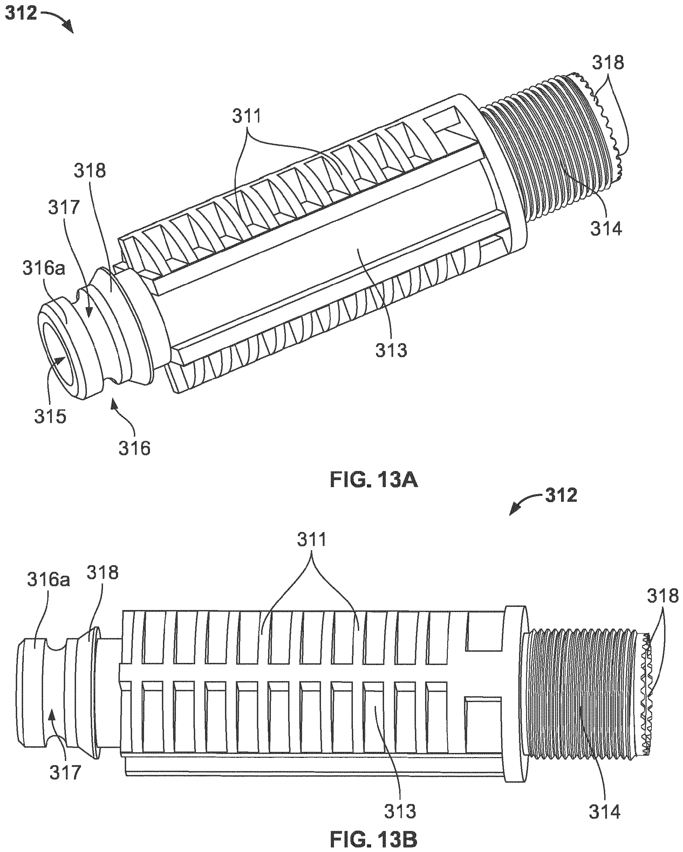

Referring to **FIGS. 12A-12B** and **FIGS. 13A-13B****,** the housing members **302, 312** of the housing **310** are illustrated. Similar to the housing **210** of the protection device **200,** both housing members **302, 312** of the protection device **300** have tubular main bodies **303, 313.** In some embodiments, the housing **310** has a cylindrical shape. Each of the housing members **302, 312** comprise a threaded section **304, 314** at one end of the main body **303, 313** and a securing mechanism **306, 316** at the opposing end of the main body **303, 313.** As discussed in further detail below, the securing mechanisms **306, 316** are configured to engage with each other to secure the two housing members **302, 312** together to form the housing **310** of the protection device **300.**

A bore **305, 315** extends through each housing member **302, 312** (*see, e.g.,* **FIG. 5B**). Similar to the protection device **200** described herein, each threaded section **304, 314** is configured to engage a respective securing member **330** to secure the protection device **300** to the cables **30** connected to an electrical component **50.** The bores **305, 315** have an inner diameter **D5** sized and configured to fit around an electrical component **50** (and, in some embodiments, an electrical component **50** having a heat shrink layer **35** such as shown in **FIG. 14B**). For example, in some embodiments, the bores **305, 315** of the housing members **302, 312** (*i.e.,* housing **310**) have an inner diameter **D5** in a range of between about 10 mm and about 100 mm.

As shown in **FIGS. 12A-12B** and **FIGS. 13A-13B****,** in some embodiments, a plurality of engagement (anti-rotation) features **308, 318** may be located at the free ends of the threaded sections **304, 314.** Similar to the protection device **200,** the plurality of engagement features **308, 318** are configured to engage with corresponding features of the pinch rings **320** (*see*, *e.g.,* **FIG. 14B**). In some embodiments, the main bodies **303, 313** may further comprise a plurality of gripping features **301, 311.** The gripping features **301, 311** are configured to help a user hold onto the housing members **302, 312,** for example, when the housing members **302, 312** are being secured together and/or when the housing **310** is being slid onto a cable **30** and around the electrical component **50** to be protected.

As shown in **FIG. 12A** and **FIGS. 13A****-13B,** in some embodiments, the securing mechanisms **306, 316** may comprise snap-fit type securing features. For example, in some embodiments, one housing member **302** may comprise an annular lip **306a** adjacent to an opening **305a** of the bore **305** and the securing mechanism **316** for the other housing member **312** may comprise a flanged edge **316a** and recess **317.** In some embodiments, the recess **317** is configured to receive and hold an O-ring **350** therein to help provide a seal between the two housing members **302, 312** when secured together (*see, e.g.,* **FIG. 14B**). In some embodiments, one of the housing members **312** may further comprise an annular sealing flange **318** which helps provide a further seal between the two housing members **302, 312** when secured together.

In some embodiments, to secure the housing members **302, 312** together, a user inserts the flanged edge **316a** of one housing member **312** into the opening **305a** of the other housing member **302** until the flanged edge **316a** engages the annular lip **306a.** In other embodiments, the flanged edge **316a** may form an interference fit with an inner surface of the main body **303** of the housing member **302.** Other types of snap-fit or securing mechanisms may be used to secure the housing members **302, 312** together. For example, in some embodiments, the securing mechanisms **306, 316** may form a cantilever snap joint. In other embodiments, the housing members **302, 312** may comprise threaded sections **304, 314** on both ends of the main bodies **303, 312** that allow the housing members **302, 312** to be screwed together.

The foregoing is illustrative of the present invention and is not to be construed as limiting thereof. Although a few exemplary embodiments of this invention have been described, those skilled in the art will readily appreciate that many modifications are possible in the exemplary embodiments without materially departing from the novel teachings and advantages of this invention. Accordingly, all such modifications are intended to be included within the scope of this invention. Therefore, it is to be understood that the foregoing is illustrative of the present invention and is not to be construed as limited to the specific embodiments disclosed, and that modifications to the disclosed embodiments, as well as other embodiments, are intended to be included within the scope of the invention.

## Claims

1. A protection device (100) for an electrical connection including an electrical component (50) and cables (30), the protection device (100) comprising:
a first housing member (110a) having a main body (112) having a length (L1), the first housing member (110a) comprising a main channel (115), a first cable channel (114), and a second cable channel (114) that together extend longitudinally the length (L1) of the main body (112); and
a substantially identical second housing member (110b) configured to be mated and secured to the first housing member (110a) via one or more locking mechanisms (132, 134) configured to be received by or engaged with one or more corresponding apertures (132a) and/or recesses (134a),
wherein, when the first housing member (110a) and the second housing member (110b) are mated together, the aligned main channels (115) of the first and second housing members (110a, 110b) form an internal cavity (115') sized and configured to hold the electrical component (50) therein and the aligned first and second cable channels (114) are sized and configured to hold a respective cable (30) connected to the electrical component (50) therein.

2. The protection device according to Claim 1, wherein the first and/or second cable channels (114) of each housing member (110a, 110b) comprise one or more rib members (118).

3. The protection device according to Claim 1 or Claim 2, wherein the one or more locking mechanisms (132, 134) extend upwardly from the main body (112) of each housing member (110a, 110b) and reside proximate to an outer edge of the main body (112), and wherein the one or more corresponding apertures (132a) and/or recesses (134a) reside proximate to an opposing outer edge of the main body (112) of each housing member (110a, 110b) and are configured to receive and/or engage with a corresponding locking mechanism (132, 134) of the other housing member (110a, 110b) when mated together.

4. The protection device according to any preceding claim, wherein each locking mechanism (132, 134) comprises a cantilevered latch or hook (132f, 134f) that is configured to deflect and engage with the respective aperture (132a) or recess (134a) when the housing members (110a, 110b) are pressed together.

5. The protection device according to any preceding claim, wherein the first housing member (110a) and the second housing member (110b) are coupled together via a living hinge (119).

6. The protection device according to any preceding claim, wherein at least one of the housing members (110a) comprise one or more pockets or channels (40a), the one or more pockets or channels (40a) configured to hold mastic or other sealing material (40) therein.

7. The protection device according to any preceding claim, wherein the main body (112) of at least one of the housing members (1 10a, 1 10b) further comprises one or more drain holes (112a) extending into the respective main channel (115).

8. The protection device according to any preceding claim, wherein at least one of the housing members (110a, 110b) comprises an additional aperture or recess (117) that is configured to receive a sensor (37) therein, the sensor (37) being configured to collect information.

9. The protection device according to any preceding claim, wherein the device (100) comprises a heat shrink layer (35) applied to the electrical component (50).

10. The protection device according to any preceding claim, further comprising one or more additional housing members (110) configured to mechanically secure the cables (30) to each end of the electrical component (50).

11. An electrical connection assembly (10), the electrical connection assembly (10) comprising:
an in-line electrical component (50) having a pair of cables (30) connected to and extending outwardly from opposing ends of the electrical component (50) ; and
a protection device (100) surrounding the in-line electrical component (50) and creating a seal with the pair of cables (30), wherein the protection device (100) comprises:
a first housing member (110a) having a main body (112) having a length (L1), the first housing member (110a) comprising a main channel (115), a first cable channel (114), and a second cable channel (114) that together extend longitudinally the length (L1) of the main body (112); and
a substantially identical second housing member (110b) configured to be mated and secured to the first housing member (110a) via one or more locking mechanisms (132, 134) configured to be received by or engaged with one or more corresponding apertures (132a) and/or recesses (134a),
wherein the first housing member (110a) and the second housing member (110b) are mated together such that the electrical component (50) is held within the aligned main channels (115) of the first and second housing members (110a, 110b) and each cable (30) is respectively held within the aligned first and second cable channels (114).

12. The electrical connection assembly according to Claim 11, wherein the main channel (115) of each housing member (110a, 110b) resides between the first and second cable channels (114).

13. The electrical connection assembly according to Claim 11 or Claim 12, wherein the one or more locking mechanisms (132, 134) extend upwardly from the main body (112) of each housing member (110a, 110b) and reside proximate to an outer edge of the main body (112), and wherein the one or more corresponding apertures (132a) and/or recesses (134a) reside proximate to an opposing outer edge of the main body (112) of each housing member (110a, 110b) and are configured to receive and/or engage with a corresponding locking mechanism (132, 134) of the other housing member (110a, 110b) when mated together.

14. The electrical connection assembly according to any of Claims 11 to 13, wherein at least one of the housing members (110a, 110b) comprise one or more pockets or channels (40a), the one or more pockets or channels (40a) configured to hold mastic or other sealing material (40) therein.

15. The electrical connection assembly according to any of Claims 11 to 14, wherein the protection device (100) comprises a heat shrink layer (35) applied to the electrical component (50).
